# NEUE EUROPÄISCHE PATENTSCHRIFT

(11) **EP 3 175 977 B2**
(45) Veröffentlichungstag und Bekanntmachung des Hinweises auf die Entscheidung über den Einspruch: **08.10.2025**
(45) Hinweis auf die Patenterteilung: 27.01.2021
(21) Anmeldenummer: 16186064.8
(22) Anmeldetag: 29.08.2016
(51) Int. Cl.: B32B 5/02, B32B 7/06, B32B 19/00, B32B 25/10, B32B 27/12, B32B 1/08, F16L 11/00, B32B 27/36, B32B 27/34, B32B 27/28, F16L 11/10, B32B 25/20, B32B 25/16, B32B 25/14, B32B 19/08, B32B 19/04, B32B 5/26

(54) **UMLAGESCHLAUCH**
MANTLE HOSE
MANCHON DE MANTEAU

(30) Priorität: 03.12.2015 DE 102015224174
(43) Veröffentlichungstag der Anmeldung: 07.06.2017
(73) Patentinhaber: ContiTech Schlauch GmbH, 30165 Hannover (DE)
(72) Erfinder: Brühne, Klaus, 34497 Korbach (DE); Schmelter, Klaus, 59929 Brilon (DE); Tasseki, Metin, 34497 Korbach (DE)
(74) Vertreter: Continental Corporation

(56) Entgegenhaltungen:
- EP-A1- 1 130 303
- EP-A2- 2 184 524
- EP-B1- 2 059 711
- WO-A1-2012/006998
- WO-A2-2014/019796
- DE-B3- 10 329 857
- JP-B2- 4 419 164
- US-A1- 2003 155 028
- US-A1- 2015 337 996

## Beschreibung

Die Erfindung betrifft einen Umlageschlauch, der insbesondere bei hohen Temperaturen zum Einsatz kommt.

Gattungsgemäße Umlageschläuche sind zum Beispiel aus WO2014/019796A2 bekannt. Es handelt sich um flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen.
Zum Schutz gegen hohe Temperaturen oder gegen Abrieb bzw. Scheuern werden die Umlageschläuche häufig noch mit einer Beschichtung an der Oberfläche versehen, die in einem zusätzlichen nachträglich gelagerten Verfahrensschritt aufgebracht werden muss. Das Aufbringen einer geschlossenen Beschichtung auf Umlageschläuche, bei denen die äußere Lage aus Festigkeitsträgern meist eine offene Struktur bildet, ist nur sehr eingeschränkt und / oder mit erhöhtem Aufwand möglich.
Ist diese Beschichtung beschädigt oder verschlissen, muss in der Regel der gesamte Schlauch entsorgt werden.

Die Aufgabe der Erfindung besteht somit darin, einen Umlageschlauch bereitzustellen, der sich durch einen verbesserten Schutz gegen hohe Temperaturen (≥ 150°C) und gegen Abrieb bzw. Scheuern auszeichnet. Die Lebensdauer des Schlauches soll hierdurch verlängert werden. Gleichzeitig soll der Umlageschlauch optimierte Flammschutzeigenschaften aufweisen

Gelöst wird diese Aufgabe dadurch, dass die Umlageschicht des Umlageschlauches mit einem Überzug versehen ist, wobei der Überzug keinen festen Haftverbund mit der Umlageschicht bildet, wodurch sich eine Luftschicht zwischen der Oberfläche des Umlageschlauches und dem Überzug befindet, und der Überzug aus Fasern aus Gestein aufgebaut ist.

Gemäß Duden, Online-Wörterbuch zur deutschen Sprache, handelt es sich bei einem Überzug um eine Schicht, mit der etwas überzogen ist, bzw. um eine auswechselbare Hülle oder einen auswechselbaren Bezug.

Der Überzug kann somit ohne negativen Einfluss auf den Umlageschlauch auf- und / oder abgezogen werden und bildet keinen festen Haftverbund mit dem Umlageschlauch. Das Aufziehen kann sehr einfach in den Schlauchherstellungsprozess integriert und durch die Wahl eines geeigneten Überzugmaterials unkompliziert an den jeweiligen Anwendungsfall angepasst werden.

Durch die Verwendung eines Überzuges zeigt sich insbesondere bei Formschläuchen eine besonders gute Geometriehaltigkeit. Der Überzug kann genau an die Form des Umlageschlauches angepasst werden. Des Weiteren kann der Umlageschlauch ohne größeren Zusatzaufwand bis in den Armierungsbereich geschützt werden und es findet keine Ablösung an den Rändern statt.

Durch den Überzug können zusätzlich die aufgrund der in den letzten Jahren gestiegenen Anforderungen hinsichtlich des Brandschutzes, welche sich vor allem in der verschärften Brandschutznorm EN 45545 zeigt, erfüllt werden.

Der Überzug bildet keinen festen Haftverbund mit der Umlageschicht, sondern kann, wie bereits beschrieben, ohne größeren Aufwand aufgezogen und / oder abgezogen werden. Hierdurch befindet sich eine Luftschicht zwischen der Oberfläche des Umlageschlauches und dem Überzug, welche im Brandfall als Isolationsschicht dient. Des Weiteren kann das Material des Überzuges selbst brandhemmend sein oder zumindest brandhemmend ausgerüstet sein.

Ein derartiger Umlageschlauch findet vorzugsweise Verwendung im Bereich Turboladerschmierung, Turboladerkühlung, Kompressoren, Kraftstoffsystemen, Dieselpartikelfiltern (DPF), Kühlwasser, Getriebe- und Motorkühlung oder in Bereichen, in denen aggressive Medien unter hohen Temperaturen transportiert werden müssen. Der Umlageschlauch kann hierbei in gerader oder auch in geformter Ausführung, z.B. als Schlauchkrümmer verwendet werden.

Wie bereits eingangs erwähnt können derartige Schläuche mehrere Lagen oder Schichten aus unterschiedlichen, Elastomeren, thermoplastischen Elastomeren oder Thermoplasten enthalten. Ebenso können neben der Umlage noch eine oder mehrere eingebettete Festigkeitsträgerlagen vorhanden sein. Hierfür können alle der fachkundigen Person bekannten Festigkeitsträgerwerkstoffe verwendet werden.
Grundsätzlich können erfindungsgemäß alle Elastomere, thermoplastische Elastomere oder Thermoplaste eingesetzt werden. Bevorzugt sind Elastomere, thermoplastische Elastomere oder Thermoplaste, die eine Temperaturbeständigkeit von größer oder gleich 150°C aufweisen.
Die Elastomere sind beispielsweise ausgewählt aus der Gruppe, bestehend aus: (teil)hydrierter Nitrilkautschuk (HNBR) und / oder Fluor-Kautschuk (FKM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierter Methylsilikonkautschuk (MFQ) und / oder Perfluorinierter Propylen-Kautschuk (FFPM) und / oder Perfluorcarbon-Kautschuk (FFKM) und / oder Ethylen-Propylen-DienKautschuk (EPDM).

Besonders gute Ergebnisse hinsichtlich der dynamischen Stabilität bei hohen Temperaturen lassen sich erzielen, wenn HNBR, FKM, FPM, ACM, AEM und / oder Silikonkautschuk verwendet wird, wobei FKM, FPM und AEM besonders gut geeignet sind.
Die genannten Elastomere können alleine oder im Verschnitt mit wenigstens zwei Elastomeren eingesetzt werden.
Ebenso ist es möglich, die Elastomere im Verschnitt mit Thermoplastischen Elastomeren und / oder Thermoplasten zu verwenden.
Als Thermoplastisches Elastomer findet vorzugsweise wenigstens ein Thermoplastisches Elastomer mit Polycarbonatanteil (TPE-C) Verwendung.

Als Material für die Festigkeitsträger der Umlage können alle der fachkundigen Person bekannten natürlichen und synthetischen Materialien verwendet werden.
Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvenylalkohol in Frage. Bei den natürlichen Materialien kann es sich um Steinwolle oder Asbest oder um Baumwolle, Flachs oder Hanf, oder um Wolle oder Seide, handeln. Anorganische Materialien wie Glas, Keramik, Kohlenstoff (Carbon), Metall oder Gestein, wie bspw. Basalt, sind ebenso denkbar.
Die genannten Werkstoffe können hierbei alleine oder in Kombination, z.B. als Hybrid oder als Mischgeflecht, verwendet werden.

Der erfindungsgemäße Umlageschlauch kann zusätzlich mit einer biegesteifen Verstärkung, wie sie bspw. aus EP 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um bzw. in die Umlage gewickelt sind. Die Monofile können dabei auch gekreuzt gewickelt sein. Die Monofile können aus einem metallischen, wie bspw. Edelstahl, oder einem nicht-metallischen Werkstoff, wie bspw. PPS oder POD, aufgebaut sein. D.h. das Material der biegesteifen Verstärkung kann hierbei gleich oder verschieden vom Material der Umlage sein.

Die Umlage wird als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Der Überzug besteht in einer bevorzugten Ausführungsform aus einem Geflecht, Gewebe oder Gewirke oder Gestrick.

Als Materialien für den Überzug werden erfindungsgemäß Fasern aus Gestein, wie bspw. Basalt, verwendet. Insbesondere die Verwendung von Basaltfasern ist zur Einhaltung der obigen Brandschutznorm besonders gut geeignet.

Vorteilhaft ist es, wenn für das Gewebe, insbesondere das Bi-Stretch-Gewebe, und / oder das Gewirke ein Hybridmaterial aus Baumwolle, Polyamid oder Polyester und Elastan, mit einer Baumwoll-dominierenden Seite und einer Polyamid- oder Polyesterdominierenden Seite verwendet wird.

Bei Einsatz eines Gewebes handelt es sich bevorzugt um ein so genanntes Bi-Stretch-Gewebe mit der Eigenschaft der Nachgiebigkeit bzw. Dehnbarkeit in alle Richtungen. Das Bi-Stretch-Gewebe hat in Kettrichtung und in Schußrichtung jeweils eine Dehnfähigkeit von größer 50%, bevorzugt von größer als 250%. Hierdurch passt sich der Überzug besonders gut der geometrischen Form des Umlageschlauches an.

Die Erfindung wird nun anhand eines Ausführungsbeispiels unter Bezugnahme auf eine schematische Zeichnung erläutert.

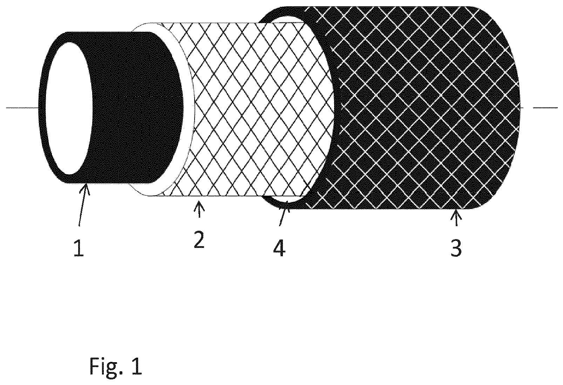

Die einzige Figur 1 zeigt einen schematischen Schlauchaufbau, aus einer Innenschicht 1 und einer Umlageschicht 2. Die Umlageschicht 2 ist hierbei mit einem Überzug 3 versehen, der keinen Haftverbund mit der Umlageschicht 2 bildet. In Figur 1 ist dies beispielhaft daran zu erkennen, dass sich zwischen der Umlageschicht 2 und dem Überzug 3 ein Hohlraum 4 befindet.

### Bezugszeichenliste

### (Teil der Beschreibung)

- 1: Innenschicht
- 2: Umlageschicht
- 3: Überzug
- 4: Hohlraum

## Patentansprüche

1. Mehrschichtiger Umlageschlauch enthaltend wenigstens eine Innenschicht (1) und eine Umlageschicht (2), **dadurch gekennzeichnet, dass** die Umlageschicht (2) mit einem Überzug (3) versehen ist, wobei der Überzug (3) keinen festen Haftverbund mit der Umlageschicht (2) bildet, wodurch sich eine Luftschicht zwischen der Oberfläche des Umlageschlauches und dem Überzug (3) befindet, und der Überzug (3) aus Fasern aus Gestein aufgebaut ist.

2. Mehrschichtiger Umlageschlauch nach Anspruch 1, **dadurch gekennzeichnet, dass** das Gestein Basalt ist.

3. Mehrschichtiger Umlageschlauch nach einem der Ansprüche 1 bis 2, **dadurch gekennzeichnet, dass** die Umlage (2) aus Polyphenylensulfid (PPS) und / oder Polyoxadiazol (POD) und / oder Aramid (AR) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyester (PES) und / oder Polyamid (PA) und / oder Polyphenylenether (PPE) und / oder Polybenzoxazol (PBO) und / oder Kohlenstofffasern (CF) und / oder Metallfasern (MF) und / oder Glasfasern (GF) aufgebaut ist.

4. Verwendung eines mehrschichtigen Umlageschlauchs nach einem der Ansprüche 1 bis 3 als Schlauch für die Turboladerschmierung, für Kompressor-Schläuche, für Dieselpartikelfiltersysteme, für Kraftstoffschläuche, für Kühlwasserschläuche und / oder für Ölschläuche.

## Claims

1. Multilayer transfer hose comprising at least one
inner layer (1) and one transfer layer (2), **characterised in that** the transfer layer (2) is provi ded with a coating (3), wherein the cover (3) does not form a firm adhesive bond with the t ransfer layer (2), whereby there is an air layer between the surface of the transfer hose and the cover (3), and the cover (3) is made up of fibres of rock.

2. Multilayer transfer hose according to claim 1, **characterized in that** the rock is basalt.

3. A multilayer transfer tubing according to any one of claims 1 to 2, **characterized in that** t he levy (2) is composed of polyphenylene sulfide (PPS) and/or polyoxadiazole (POD) and/ or aramid (AR) and/or polyimide (PI) and/or polyetheretherketone (PEEK) and/or polyethy lene-2,6-naphthalate (PEN) and/or polyphenylene oxide (PPO) and/or polyester (PES) and/ or polyamide (PA) and/or polyphenylene ether (PPE) and/or polybenzoxazole (PBO) and a nd / or carbon fibers (CF) and/or metal fibers (MF) and/or glass fibers (GF).

4. Use of a multilayer transfer hose according to any one of claims 1 to 3 as a hose for turb ocharger lubrication, for compressor hoses, for diesel particulate filter systems, for fuel hos es, for coolant hoses and/or for oil hoses.

## Revendications

1. Tuyau de transfert multicouche comprenant au moins une couche intérieure (1) et une co uche de transfert (2), **caractérisé en ce que** la couche de transfert (2) est pourvue d'un revê tement (3), dans lequel le couvercle (3) ne forme pas de liaison adhésive solide avec la cou che de transfert (2), dans lequel il existe une couche d'air entre la surface du tuyau de trans fert et le couvercle (3), et le couvercle (3) est constitué de fibres de roche.

2. Tuyau de transfert multicouche selon la revendication 1, **caractérisé en ce que** la roche e st du basalte.

3. Tube de transfert multicouche selon l'une quelconque des revendications 1 à 2, caractér isé en ce que le prélèvement (2) est composé de sulfure de polyphénylène (PPS) et/ou de polyoxadiazole (POD) et/ou d'aramide (AR) et/ou de polyimide (PI) et/ou de polyétheréthe rcétone (PEEK) et/ou de polyéthylène-2,6-naphtalate (PEN) et/ou d'oxyde de polyphénylè ne (PPO) et/ou de polyester (PES) et/ou de polyamide (PA) et/ou de polyphénylène éther ( PPE) et/ou de polybenzoxazole (PBO) et et et / ou des fibres de carbone (CF) et/ou des fibr es métalliques (MF) et/ou des fibres de verre (GF).

4. Utilisation d'un tuyau de transfert multicouche selon l'une quelconque des revendication s 1 à 3 comme tuyau pour la lubrification du turbocompresseur, pour les tuyaux de compr esseur, pour les systèmes de filtre à particules diesel, pour les tuyaux de carburant, pour le s tuyaux de liquide de refroidissement et/ou pour les tuyaux d'huile.
